# EUROPEAN PATENT SPECIFICATION

(11) **EP 1 798 843 B1**
(45) Date of publication and mention of the grant of the patent: **26.03.2008**
(21) Application number: 05292731.6
(22) Date of filing: 16.12.2005
(51) Int. Cl.: H02K 7/116, A63B 55/08

(54) **Drive unit and golf caddy**
Antriebseinheit und Golfwagen
Unité d'entraînement et chariot de golf

(43) Date of publication of application: 20.06.2007
(73) Proprietor: Alcatel Lucent, 75008 Paris (FR)
(72) Inventor: Pfendler, Klaus, 79848 Bonndorf (DE)
(74) Representative: Brose, Gerhard

(56) References cited:
- EP-A- 0 769 839
- WO-A-01/96136
- DE-U1- 9 115 313
- DE-U1- 29 809 290
- US-A- 3 178 963
- US-A- 5 109 938
- US-B1- 6 398 685

## Description

The invention relates to a drive unit with an electric motor, a gear and two output shafts aligned with one another, especially for driving two wheels of a golf caddy in a common sense, wherein the electric motor is arranged between the two output shafts such that between the electric motor and the output shafts one gear each of two identical gears is arranged laterally reversed, according to the preamble of claim 1, and a golf caddy.

Such a drive unit is known from US Patent 3,178,963.

More and more golf caddies are motorized with small electric motors. Upon being started such caddy then runs straightforward for a pre-chosen time intended to run a pre-chosen distance. Such caddies normally have an end-to-end axis between the wheels with a gear wheel somewhere in the middle thereof, where the motor engages with the rest of a gear. The motor hence is projecting from this axis.

The drive units of such caddies are not compact and therefore the caddies are unaesthetic.

The problem underlying the invention is to find a more compact solution of the drive units resulting in more aesthetic caddies.

This problem is solved by a drive unit according to the teaching of claim 1 and a golf caddy according to the teaching of claim 5.

Further embodiments of the invention are to be found in the dependant claims and in the description.

In the following the invention will be described with the aid of the drawings:
- Figure 1: shows a perspective view of a drive unit according to the invention.

- Figure 2: shows a mechanical drawing of a drive unit according to the invention.
- Figure 3: shows a cross-sectional view of a part of a drive unit according to the invention.

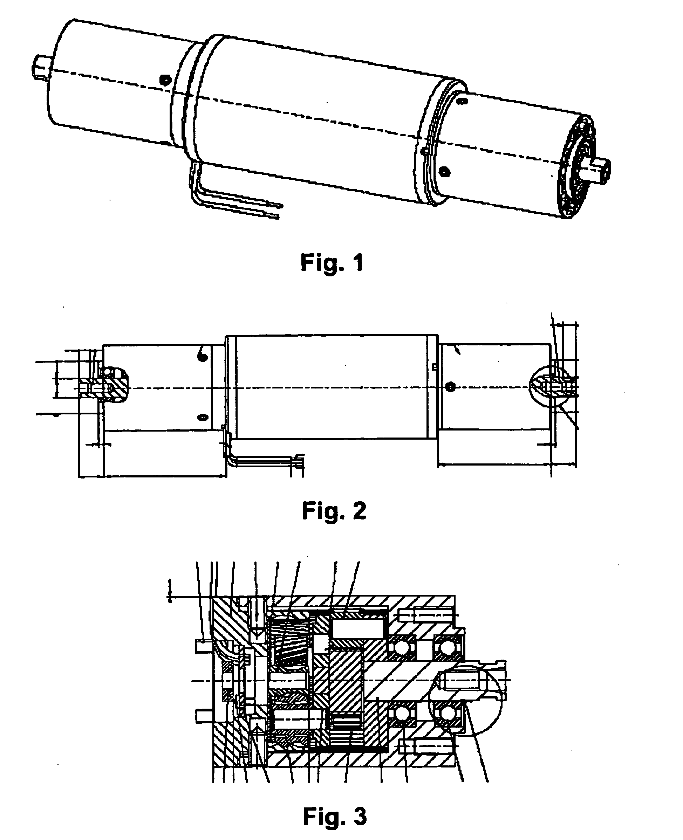

The drive unit shown in figure 1 shows an almost esthetical form. It shows an almost highly symmetrical cylindrical arrangement. At both ends are short axel stubs as output shafts of the drive unit. There the two drive wheels of a caddy or whatever other apparatus can be fixed. Inwardly from both axel stubs follow two gears, one on each side. Both gears are identical. In this preferred embodiment the gears have the outer form of cylinders, where all cylinders have the same axis. In the centre there is the electric motor, forming the thickest cylinder. There is a slight asymmetry insofar as on the left side there is a small intermediate ring between the gear and the electric motor. This intermediate ring has the same outer diameter as the gear. From this ring the leads of the motor and of a sensor arrangement emerge.

Of course an arrangement with motor, gear and intermediate ring having the same diameter would solve the problem as well.

The gears are of the planetary type and thus are of coaxial design. This results in an esthetical effect.

A drive unit for a golf caddy with similar shape is disclosed in US Patent 5,109,938. There details about the drive unit as such are not given.

As a sensor arrangement is only used in the most preferred embodiment, the intermediate ring is not absolutely necessary. Of course, if such ring is present, it could also have the outer shape of the motor.

Figure 2 shows the same arrangement as figure 1, but in form of a mechanical drawing. As the dimensions are not of relevance here, they are hidden. The axel stubs and their surroundings are shown sliced here.

Figure 3 shows the left gear of figure 2 together with the intermediate ring including the already mentioned sensor in a cross-sectional view. Compared with figure 2 this gear here is shown in a mirrored view, as it is usual to show a gear with the output on the right-hand side. Consequently the intermediate ring is on the left side here.

A preferred embodiment of the drive unit carries a Hall sensor arrangement with at least one Hall magnet and at least one Hall sensor. When the drive unit is part of a golf caddy one can use a counter instead of a timer to represent the way the caddy has run. When the drive unit is part of another apparatus it might be even more important to be able to sense the exact movement.

Such Hall sensor here is within the intermediate ring. The input shaft of the gear, which is also the output shaft of the motor, carries a magnet acting here.as Hall magnet. In the preferred embodiment the Hall magnet is a ring with a rectangular cross-section. This ring is magnetized such that it has two north poles and two south poles along its circumference. In principle one pair of north and south poles would be sufficient. Usual magnetized rings for such purpose carry from one up to 12 pairs of poles.

On the right hand side of the Hall magnet and next to it there is a fixed disc carrying at least one Hall sensor. With one Hall sensor it is only possible to measure rotation angle and rotational speed, but not the direction of rotation. This can be measured using two Hall sensors having a spacing of 90 degrees.

In this invention the gear is a planetary gear. In order to have a sufficient gear reduction, the gear is two staged. In order to cope with a high turning moment, the gear wheels of the first stage are preferably made of zinc die-casting. For the gear wheels of the second and any potential further stages plastics is sufficient.

Gear wheels of plastics also have the advantage that they are not as loud as those of metal. But it is known that gears that are sloped linked are not as loud as spur-toothed ones. That is why preferably the gear wheels of the first stage are sloping linked.

The output shaft is supported by two ball bearings giving sufficient support for this short axel stub.

## Claims

1. Drive unit with an electric motor, a gear and two output shafts aligned with one another, especially for driving two wheels of a golf caddy in a common sense, wherein the electric motor is arranged between the two output shafts such that between the electric motor and the output shafts one gear each of two identical gears is arranged laterally reversed, **characterized in, that** the gears are planetary gears, that each planetary gear is at least two-staged, that the gear wheels of the first stage are made of zinc die-casting, and that the gear wheels of the further stages are made of plastics.

2. Drive unit according to claim 1, **characterized in, that** the axis of the electric motor, the two output shafts and the axes of the planetary gears are aligned.

3. Drive unit according to claim 1, **characterized in, tha**t the first stage is sloping linked.

4. Drive unit according to claim 1, **characterized in, that** between the electric motor and one of the gears at least one stationary hall sensor and at least one hall magnet rotating with the output of the electric motor is attached.

5. Golf caddy with a drive unit according to claim 1.

## Patentansprüche

1. Antriebseinheit mit einem Elektromotor, einem Getriebe und zwei miteinander in Flucht liegenden Abtriebswellen, insbesondere zum Antreiben von zwei Rädern eines Golfwagens in einer gemeinsamen Richtung, wobei der Elektromotor zwischen den beiden Abtriebswellen in der Weise angeordnet ist, dass zwischen dem Elektromotor und den Abtriebswellen ein Getriebe von jeweils zwei identischen Getrieben seitenverkehrt angeordnet ist, **dadurch gekennzeichnet, dass** die Getriebe Planetengetriebe sind, dass jedes Planetengetriebe mindestens zweistufig ist, dass die Zahnräder der ersten Stufe aus Zinkdruckguss bestehen und dass die Zahnräder der weiteren Stufen aus Kunststoff bestehen.

2. Antriebseinheit nach Anspruch 1, **dadurch gekennzeichnet, dass** die Achse des Elektromotors, die beiden Abtriebswellen und die Achsen der Planetengetriebe miteinander in Flucht liegen.

3. Antriebseinheit nach Anspruch 1, **dadurch gekennzeichnet, dass** die erste Stufe schrägverzahnt ist.

4. Antriebseinheit nach Anspruch 1, **dadurch gekennzeichnet, dass** zwischen dem Elektromotor und einem der Getriebe mindestens ein feststehender Hall-Sensor und mindestens ein mit dem Abtrieb des Elektromotors rotierender Hall-Magnet befestigt ist.

5. Golfwagen mit einer Antriebseinheit nach Anspruch 1.

## Revendications

1. Unité d'entraînement avec un moteur électrique, un engrenage et deux arbres de sortie alignés l'un sur l'autre, en particulier, pour entraîner deux roues d'un chariot de golf dans un sens commun, dans laquelle le moteur électrique est agencé entre les deux arbres de sortie, de sorte qu'un engrenage soit agencé inversé latéralement au niveau de chacune des deux engrenages identiques, entre le moteur électrique et les arbres de sortie, **caractérisé en ce que** les engrenages sont des engrenages planétaires, que chaque engrenage planétaire est au moins à deux étages, les roues d'engrenage du premier étage sont constituées de zinc moulé sous pression, et **en ce que** les roues d'engrenage des autres étages sont constituées de matiére plastique.

2. Unité d'entraînement selon la revendication 1, **caractérisé en ce que**, l'axe du moteur électrique, les deux arbres de sortie et les axes des engrenages planétaires sont alignés.

3. Unité d'entraînement selon la revendication 1, **caractérisé en ce que**, le premier étage est relié incliné.

4. Unité d'entraînement selon la revendication 1, **caractérisé en ce que**, entre le moteur électrique et l'un des engrenages est fixé au moins un capteur fixe à effet de Hall et au moins un aimant à effet de Hall tournant avec la sortie du moteur électrique.

5. Chariot de golf avec une unité d'entraînement selon la revendication 1.
